# EUROPEAN PATENT SPECIFICATION

(11) **EP 2 871 764 B1**
(45) Date of publication and mention of the grant of the patent: **27.06.2018**
(21) Application number: 14192231.0
(22) Date of filing: 07.11.2014
(51) Int. Cl.: H02M 7/483, H02M 7/49, H02J 3/18, H02J 3/32

(54) **Power conversion device**
Stromwandler
Dispositif de conversion d'alimentation

(30) Priority: 07.11.2013 JP 2013231284
(43) Date of publication of application: 13.05.2015
(73) Proprietor: Hitachi, Ltd., Tokyo 100-8280 (JP)
(72) Inventor: Yoshihara, Tohru, Tokyo, 100-8280 (JP); Katoh, Shuji, Tokyo, 100-8280 (JP); Inoue, Shigenori, Tokyo, 100-8280 (JP); Eguchi, Yoshio, Tokyo, 100-8280 (JP); Ichinose, Masaya, Tokyo, 100-8280 (JP)
(74) Representative: Beetz & Partner mbB

(56) References cited:
- EP-A1- 1 701 436
- EP-A1- 2 416 486
- WO-A1-2011/134521
- WO-A1-2013/077250
- JP-U- H0 543 735

## Description

### BACKGROUND OF THE INVENTION

The present invention relates to a power conversion device that includes a plurality of clusters in each of which one or more unit cells are connected in series. A power conversion device as described in the preamble portion of patent claim 1 has been known from WO 2011/134521 A1.

A Modular Multilevel Converter (MMC) is a power converter that uses on/off controllable switching devices such as an Insulated Gate Bipolar Transistor (IGBT), to produce a voltage, equal to or higher than the withstand voltage of these switching devices, to the output side.

Paragraph 0002 of the specification of JP-2011-176955 A describes that "The delta-connected cascade multilevel converter (hereinafter called CMC) employs a circuit method that uses the on/off controllable switching devices, such as an Insulated Gate Bipolar Transistors (IGBT), to output a voltage equal to or higher than the withstand voltage of the switching devices. According to "Classification and comparison of modular multilevel converters (MMC)" by Makoto Hagiwara and Hirofumi Akagi, pp. 1-45, 2008 IEE-Japan Industry Application Society Conference, the delta-connected CMC is configured by delta-connecting three series-connected members, each of which is composed of a cluster (a series-connected member of a plurality of unit cells) and a single-phase reactor."

Paragraph 0003 of the specification of JP-2011-176955 A describes that "Each unit cell, a single-phase full-bridge circuit, includes switching devices and a DC capacitor. The unit cell controls the on/off of the switching devices to output the DC capacitor voltage, the reversed-polarity voltage of the DC capacitor, or the zero voltage."

Paragraph 0004 of the specification of JP-2011-176955 A describes that "Because each cluster is a series-connected member of one or more unit cells, the output voltage of each cluster (hereinafter called the cluster voltage) is the sum of the output voltages of one or more unit cells included in the cluster. When each cluster includes a plurality of unit cells, the cluster voltage may be in a multilevel waveform by appropriately shifting the switching times of the unit cells included in the cluster. Therefore, by increasing the number of unit cells included in each cluster, the higher harmonic components of the cluster voltage can be reduced."

Paragraph 0005 of the specification of JP-2011-176955 A describes that "The delta-connected CMC linked to the electric power system can be operated, for example, as a self-excited static synchronous compensator (STATCOM)."

The delta-connected MMC is thought of as a three-phase voltage source in which each of the three clusters applies the sum of the output voltages of the unit cells. When the delta-connected MMC is linked to the electric power system, the differential voltage between the system voltage of the electric power system and the output voltage of the delta-connected MMC is applied to the impedance between the electric power system and the delta-connected MMC and, as a result, the electric current flows. This allows active power and reactive power to be transferred between the electric power system and the delta-connected MMC.

### SUMMARY OF THE INVENTION

The waveform of each cluster voltage of the delta-connected MMC is not an ideal sine wave but is a multilevel waveform generated by the switching of the unit cells included in each cluster.

As shown in FIG. 4 in the specification of JP-2011-176955 A or in FIG. 3 of the present invention, the multilevel waveform generated by the switching of the unit cells includes components that prevent the sum of three cluster voltages from becoming zero. In the description below, the sum of the three cluster voltages is called a zero-phase voltage.

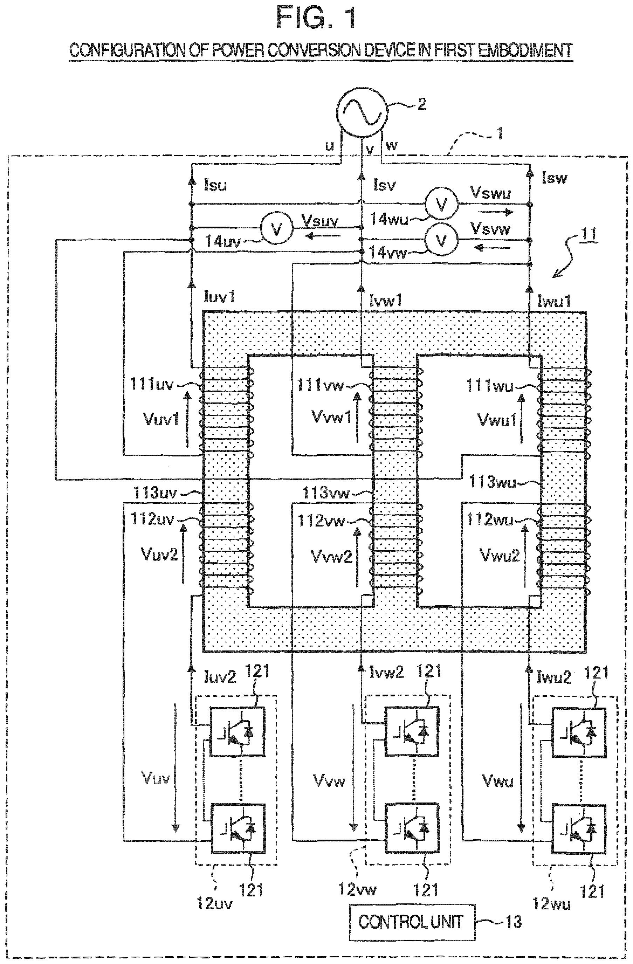

In the power conversion device described in JP-2011-176955 A, there is a circulation circuit composed of the clusters and a single-phase reactor as shown in FIG. 1. If the single-phase reactor is not connected in this power conversion device, the current that circulates through the three clusters (hereinafter called the zero-phase current) becomes excessive due to the zero-phase voltage, sometimes resulting in a possibility that the IGBTs of the unit cells of a cluster are destroyed. To avoid this condition, the power conversion device described in JP-2011-176955 A must have a single-phase reactor to limit the zero-phase current.

WO 2011/134521 A1 discloses a power conversion device comprising a cluster in which one or more unit cells, each comprising power storage means and switching means for outputting the power of the power storage means, are connected in series; and a three-phase transformer that has at least three legs on each of which a primary winding and a secondary winding are wound for magnetic coupling wherein both ends of the secondary winding are connected respectively to both ends of the cluster, wherein a control unit turns on or off the switching means included in the unit cell for controlling the cluster voltages, so that each cluster voltage becomes a desired voltage value on the basis of the line-to-line voltages.

Such a power conversion device has also been known from EP 2 416 486 A1.

Both power conversion devices have in common that they do not have any voltage sensors on the level of the unit cells and of the primary windings of a transformer, which feed their output signals to a controller which, in turn, limits the zero-phase current which circulates through the clusters.

The same applies for document EP 1 701 436 A1 which does not describe a transformer having at least three legs.

In view of the foregoing, it is an object of the present invention to provide a power conversion device that can limit the zero-phase current without using a reactor.

This object is accomplished with a power conversion device with the features of claim 1.

Dependent claims are directed on features of preferred embodiments of the invention.

Other means will be described in Detailed Description of the Exemplary embodiments.

According to the present invention, there is provided a power conversion device that limits the zero-phase current without using a reactor.

Other objects, features and advantages of the invention will become apparent from the following description of the embodiments of the invention taken in conjunction with the accompanying drawings.

### BRIEF DESCRIPTION OF THE DRAWINGS

FIG. 1 is a general configuration diagram showing a power conversion device in a first embodiment.
FIG. 2 is a diagram showing a configuration and an operation of a unit cell in the first embodiment.
FIG. 3 is a diagram showing an example of the waveforms of the cluster voltages in the first embodiment.
FIG. 4 is a diagram showing a path of the zero-phase current in the first embodiment.
FIG. 5 is a general configuration diagram showing a power conversion device in a second embodiment.
FIG. 6 is a diagram showing a configuration and an operation of a unit cell in the second embodiment.
FIG. 7 is a general configuration diagram showing a power conversion device in a third embodiment.

### DETAILED DESCRIPTION OF THE EMBODIMENTS

Embodiments of the present invention are described in detail below with reference to the drawings.

### (First embodiment)

A power conversion device 1 in the first embodiment eliminates the need for a single-phase reactor, which is required in the invention described in JP-A-2011-176955, and reduces the number of parts of the power conversion device 1.

FIG. 1 is a general configuration diagram showing the power conversion device 1 in the first embodiment.

The power conversion device 1, connected to an electric power system 2, is linked to this electric power system 2.

The power conversion device 1 includes a transformer 11, a uv-phase cluster 12uv, a vw-phase cluster 12vw, a wu-phase cluster 12wu, a control unit 13, and voltmeters 14uv, 14vw, and 14wu. The power conversion device 1 is a three-phase MMC.

In the description below, the connection sides of the transformer 11 are described as follows. The side in which the electric power system 2 is connected is called a "primary side", and the side in which the clusters 12uv, 12vw, and 12wu are connected is called a "secondary side".

The transformer 11, a three-phase transformer, has a three-leg core. The transformer 11 includes legs 113uv, 113vw, and 113wu. On the leg 113uv, a uv-phase primary winding 111uv and a uv-phase secondary winding 112uv are wound around for magnetic coupling. On the leg 113vw, a vw-phase primary winding 111vw and a vw-phase secondary winding 112vw are wound around for magnetic coupling. On the leg 113wu, a wu-phase primary winding 111wu and a wu-phase secondary winding 112wu are wound around for magnetic coupling.

In each of the uv-phase cluster 12uv, vw-phase cluster 12vw, and wu-phase cluster 12wu, six unit cells 121 are connected in series. In FIG. 1, the two unit cells 121 represent the six unit cells. Note that the number of unit cells is not limited to six. In each of the clusters 12uv, 12vw, and 12wu, one or any number of unit cells 121 may be connected.

The both ends of the uv-phase secondary winding 112uv of the transformer 11 are connected to the both ends of the uv-phase cluster 12uv. The both ends of the vw-phase secondary winding 112vw of the transformer 11 are connected to the both ends of the vw-phase cluster 12vw. The both ends of the wu-phase secondary winding 112wu of the transformer 11 are connected to the both ends of the wu-phase cluster 12wu.

The uv-phase primary winding 111uv of the transformer 11 is connected between the u-phase and the v-phase of the electric power system 2. The vw-phase primary winding 111vw of the transformer 11 is connected between the v-phase and the w-phase of the electric power system 2. The wu-phase primary winding 111wu of the transformer 11 is connected between the w-phase and the u-phase of the electric power system 2. That is, the primary windings 111uv, 111vw, and 111wu of the transformer 11 are delta-connected for connection to the electric power system 2.

The voltmeter 14uv is connected between the u-phase and the v-phase of the electric power system 2 to measure the line-to-line voltage Vsuv. The voltmeter 14vw is connected between the v-phase and the w-phase of the electric power system 2 to measure the line-to-line voltage Vsvw. The voltmeter 14wu is connected between the w-phase and the u-phase of the electric power system 2 to measure the line-to-line voltage Vswu. In addition, the voltmeters 14uv, 14vw, and 14wu are connected to the control unit 13 via an optical fiber (not shown) to send the measured voltage information.

The control unit 13 is connected to the voltmeters 14uv, 14vw, and 14wu and to the unit cells 121, which constitute the clusters 12uv, 12vw, and 12wu, via an optical fiber (not shown). The control unit 13 controls cluster voltages Vuv, Vvw, and Vwu based on the line-to-line voltages Vsuv, Vsvw, and Vswu measured by the voltmeters 14uv, 14vw, and 14wu.

The voltage and the current are defined as follows.

The voltage between the both ends of the uv-phase cluster 12uv is the cluster voltage Vuv. The voltage between the both ends of the vw-phase cluster 12vw is the cluster voltage Vvw. The voltage between the both ends of the wu-phase cluster 12wu is the cluster voltage Vwu.

The secondary-side current Iuv2 flows between the uv-phase cluster 12uv and the uv-phase secondary winding 112uv of the transformer 11. The secondary-side current Ivw2 flows between the vw-phase cluster 12vw and the vw-phase secondary winding 112vw of the transformer 11. The secondary-side current Iwu2 flows between the wu-phase cluster 12wu and the wu-phase secondary winding 112wu of the transformer 11.

The secondary-side voltage Vuv2 is applied to both ends of the uv-phase secondary winding 112uv of the transformer 11. The secondary-side voltage Vuv2 and the cluster voltage Vuv are the same.

The secondary-side voltage Vvw2 is applied to both ends of the vw-phase secondary winding 112vw of the transformer 11. The secondary-side voltage Vvw2 and the cluster voltage Vvw are the same.

The secondary-side voltage Vwu2 is applied to both ends of the wu-phase secondary winding 112wu of the transformer 11. The secondary-side voltage Vwu2 and the cluster voltage Vwu are the same.

The voltage across both ends of the uv-phase primary winding 111uv of the transformer 11 is the primary-side voltage Vuv1. The voltage across both ends of the vw-phase primary winding 111vw of the transformer 11 is the primary-side voltage Vvw1. The voltage across both ends of the wu-phase primary winding 111wu of the transformer 11 is the primary-side voltage Vwu1.

The primary-side current Iuv1 flows through the uv-phase primary winding 111uv of the transformer 11. The direction in which the primary-side current Iuv1 flows is the same as the positive direction of the primary-side voltage Vuv1.

The primary-side current Ivw1 flows through the vw-phase primary winding 111vw of the transformer 11. The direction in which the primary-side current Ivw1 flows is the same as the positive direction of the primary-side voltage Vvw1.

The primary-side current Iwu1 flows through the wu-phase primary winding 111wu of the transformer 11. The direction in which the primary-side current Iwu1 flows is the same as the positive direction of the primary-side voltage Vwu1.

In the u-phase of the electric power system 2, the system current Isu flows in the direction from the power conversion device 1 to the electric power system 2. In the v-phase of the electric power system 2, the system current Isv flows in the direction from the power conversion device 1 to the electric power system 2. In the w-phase of the electric power system 2, the system current Isw flows in the direction from the power conversion device 1 to the electric power system 2.

The voltage between the u-phase and the v-phase of the electric power system 2 is the line-to-line voltage Vsuv. The line voltage Vsuv is measured by the voltmeter 14uv.

The voltage between the v-phase and the w-phase of the electric power system 2 is the line-to-line voltage Vsvw. The line-to-line voltage Vsvw is measured by the voltmeter 14vw.

The voltage between the w-phase and the u-phase of the electric power system 2 is the line-to-line voltage Vswu. The line-to-line voltage Vswu is measured by the voltmeter 14wu.

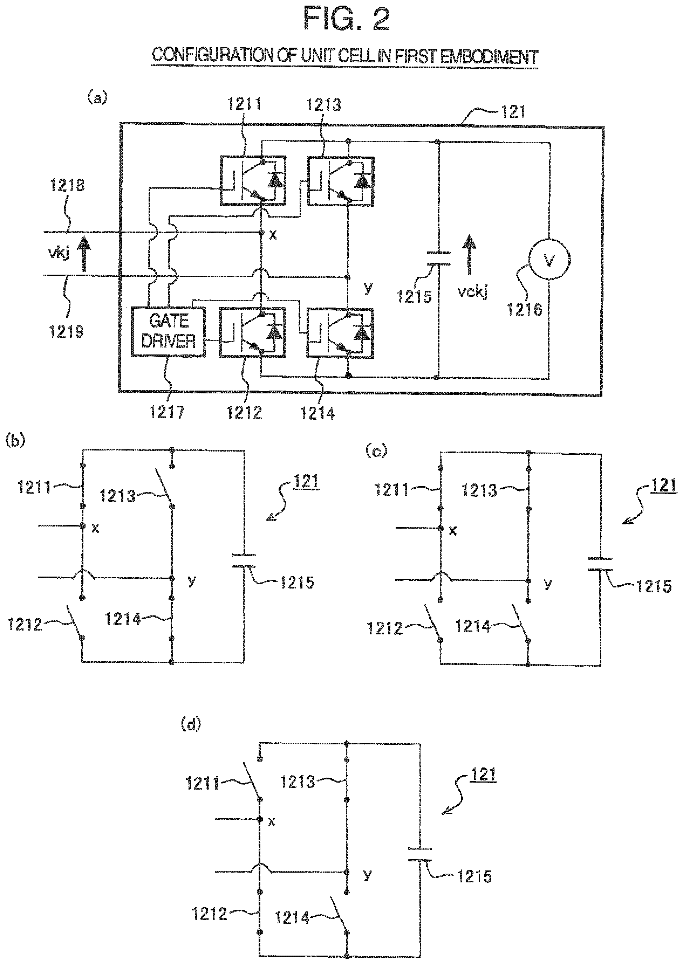

FIG. 2(a) to (d) are diagrams showing the configuration and the operation of the unit cells 121 in the first embodiment.

FIG. 2(a) is a general configuration diagram showing the unit cell 121 in the first embodiment.

The unit cells 121 includes an x-phase high-side switching device 1211 an x-phase low-side switching device 1212, a y-phase high-side switching device 1213, a y-phase low-side switching device 1214, a DC capacitor 1215, a voltmeter 1216, and a gate driver 1217. The switching devices 1211 - 1214 are on/off controllable devices, such as an IGBT or a GTO (Gate Turn-Off thyristor) and, in each of the devices, a diode is connected in the reverse direction.

The x-phase is connected to the positive-side terminal 1218 of this unit cell 121 and to the emitter of the switching device 1211 and the collector of the switching device 1212.

The y-phase is connected to the negative-side terminal 1219 of this unit cell 121 and to the emitter of the switching device 1213 and the collector of the switching device 1214.

The collector of the switching device 1211 and the collector of the switching device 1213 are connected to one end of the DC capacitor 1215. The emitter of the switching device 1212 and the emitter of the switching device 1214 are connected to the other end of the DC capacitor 1215 that works as voltage application means.

That is, the switching devices 1211 - 1214 form a full-bridge circuit. To the DC side of this full-bridge circuit, the DC capacitor 1215 that works as voltage application means is connected. The DC capacitor 1215 is voltage application means that applies the voltage vckj to the both ends. Note that k indicates one of the uv-phase, vw-phase, and wu-phase and that j indicates the number of the unit cell 121.

The AC side of this full-bridge circuit is the x-phase and the y-phase. The x-phase is connected to the positive-side terminal 1218. The y-phase is connected to the negative-side terminal 1219. The voltage between the positive-side terminal 1218 and the negative-side terminal 1219 is the unit cell voltage vkj.

The gate of each of the switching devices 1211 - 1214 is connected to the gate driver 1217. The gate driver 1217 is connected to the control unit 13 via an optical fiber (not shown) (see FIG. 1). The control unit 13 sends the control signal to the gate driver 1217 via an optical fiber (not shown) to control the on/off of the switching devices 1211 - 1214.

The voltmeter 1216, connected to the both ends of the DC capacitor 1215, measures the voltage vckj and outputs the information on the measured voltage vckj to the control unit 13 via an optical fiber (not shown).

FIG. 2(b) is a diagram showing a method for applying the positive voltage to the unit cell 121.

In the case shown in FIG. 2(b), the switching device 1211 on the x-phase high side is on, the switching device 1212 on the x-phase low side is off, the switching device 1213 on the y-phase high side is off, and the switching device 1214 on the y-phase low side is on. In this case, the unit cell voltage vkj is approximately equal to the voltage vckj, applied by the DC capacitor 1215, regardless of the electric current flowing in this unit cell 121. In this specification, the voltage vckj applied by the DC capacitor 1215 is called a positive voltage.

FIG. 2(c) is a diagram showing a method for applying the zero voltage to the unit cell 121.

In the case shown in FIG. 2(c), the switching device 1211 on the x-phase high side is on, the switching device 1212 on the x-phase low side is off, the switching device 1213 on the y-phase high side is on, and the switching device 1214 on the y-phase low side is off. In this case, the unit cell voltage vkj is approximately equal to 0[V] regardless of the electric current flowing in this unit cell 121.

Similarly, when the switching device 1211 on the x-phase high side is off, the switching device 1212 on the x-phase low side is on, the switching device 1213 on the y-phase high side is off, and the switching device 1214 on the y-phase low side is on, the unit cell voltage vkj is approximately equal to 0[V] regardless of the electric current flowing in each unit cell 121.

FIG. 2(d) is a diagram showing a method for applying the negative voltage to the unit cell 121.

In the case shown in FIG. 2(d), the switching device 1211 on the x-phase high side is off, the switching device 1212 on the x-phase low side is on, the switching device 1213 on the y-phase high side is on, and the switching device 1214 on the y-phase low side is off. In this case, the unit cell voltage vkj is approximately equal to the negative voltage (-vckj), which is the inverse of the voltage applied by the DC capacitor 1215, regardless of the electric current flowing in this unit cell 121.

Therefore, the unit cells 121 may be thought of as the voltage source that applies the positive voltage vckj, zero voltage (0), or negative voltage (-vckj) regardless of the electric current flowing in this unit cell 121.

Next, the cluster voltages Vuv, Vvw, and Vwu are described below.

The control unit 13 of the power conversion device 1 in the first embodiment uses the carrier phase shift PWM (Pulse-Width Modulation) to control the on/off of the switching device 1211 - 1214 included in each unit cell 121.

In the power conversion device 1 in the first embodiment, each of the clusters 12uv, 12vw, and 12wu includes six unit cells 121, and the frequency of the triangle wave carrier signal of each unit cell 121 is nine times higher than the basic wave frequency. Note that the number of unit cells 121 and the frequency of the carrier signal are not limited to those values but that other values may also be used for them.

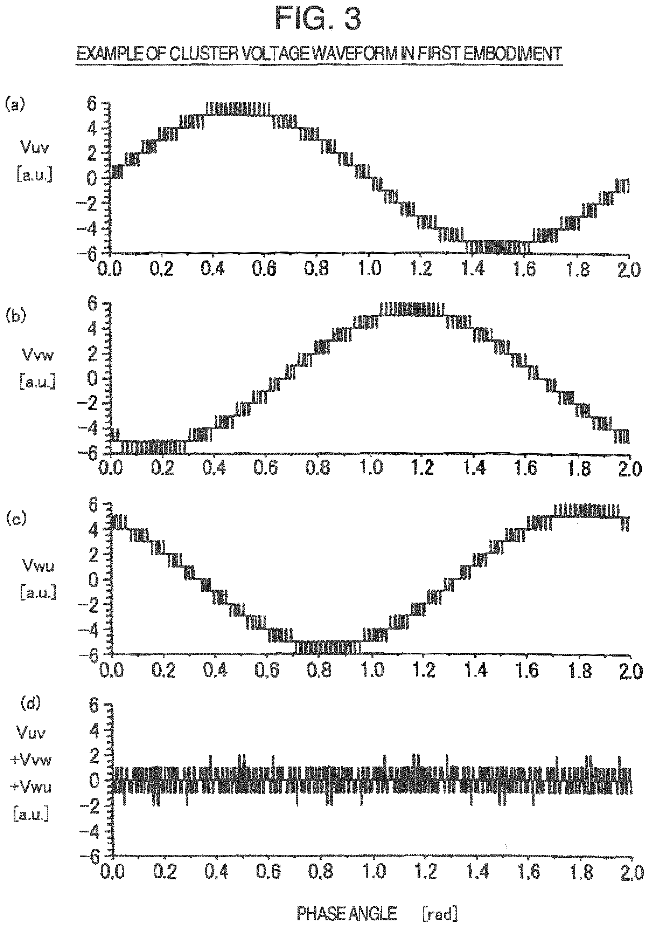

FIG. 3(a) to (d) are diagrams showing an example of the waveform of each cluster voltage in the first embodiment.

FIG. 3(a) shows the waveform of the cluster voltage Vuv. The vertical axis in the figure indicates the cluster voltage Vuv in arbitrary units [a. u.] (Arbitrary Unit).

FIG. 3(b) shows the waveform of the cluster voltage Vvw. The vertical axis in the figure indicates the cluster voltage Vvw in arbitrary units [a. u.].

FIG. 3(c) shows the waveform of the cluster voltage Vwu. The vertical axis in the figure indicates the cluster voltage Vwu in arbitrary units [a. u.].

FIG. 3(d) shows the waveform of the sum voltage Vuv + Vvw + Vwu. The vertical axis in the figure indicates the sum voltage Vuv + Vvw + Vwu in arbitrary units [a. u.].

The horizontal axis in each of FIG. 3(a) - 3(d) indicates the phase angle in radians [rad] using π as the unit.

The power conversion device 1 in the first embodiment sets an equal amplitude for the amplitude of the fundamental wave component of the cluster voltages Vuv, Vvw, and Vwu, with the phase of the fundamental wave component shifted by (2π/3) [rad] with respect to each other.

As shown in FIG. 3(a) to 3(c), each of the cluster voltages Vuv, Vvw, and Vwu has 13 levels of waveform (positive and negative levels (2) × number of unit cells 121 (6) + 1 (zero-voltage level)).

Here, each of the clusters 12uv, 12vw, and 12wu, in which one or more unit cells 121 are connected in series, may be thought of as a voltage source, which applies the sum of output voltages of one or more unit cells 121, regardless of the secondary-side currents Iuv2, Ivw2, and Iwu2 that flow in each of the clusters.

Each of the cluster voltages Vuv, Vvw, and Vwu includes the fundamental wave component and the harmonic component.

The sum voltage Vuv + Vvw + Vwu of the cluster voltages Vuv, Vvw, and Vwu, shown in FIG. 3(d), does not include the fundamental wave component. However, the sum voltage Vuv + Vvw + Vwu does not become 0 but includes the zero-phase component. The current proportional to the time integration of the zero-phase component is the zero-phase current 10. Note that the waveforms in FIG. 3(a) to 3(d) are exemplary only. The waveforms may be controlled so that the cluster voltages Vuv, Vvw, and Vwu include the zero-phase fundamental wave component or a higher harmonic component with an order equal to or lower than that of the switching frequency.

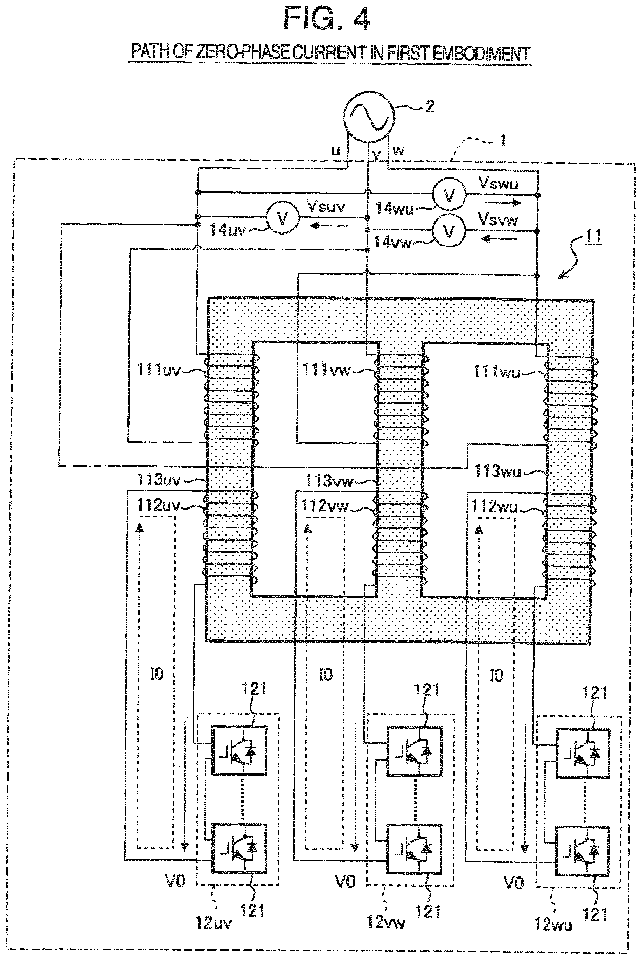

FIG. 4 is a diagram showing the path of the zero-phase voltage V0 and the zero-phase current I0 in the first embodiment. The same reference value is given to the same member as that in FIG. 1.

The zero-phase voltage V0 of the uv-phase cluster 12uv is applied to the secondary winding 112uv of the transformer 11 and, in proportion to the time integration of this zero-phase component, the zero-phase current I0 flows. The uv-phase zero-phase current 10, which flows in the closed circuit formed by the cluster 12uv and the secondary winding 112uv of the transformer 11, is limited by the inductance of the secondary winding 112uv.

Similarly, the zero-phase voltage V0 of the vw-phase cluster 12vw is applied to the secondary winding 112vw of the transformer 11 and, in proportion to the time integration of this zero-phase component, the zero-phase current I0 flows. The vw-phase zero-phase current 10, which flows in the closed circuit formed by the cluster 12vw and the secondary winding 112vw of the transformer 11, is limited by the inductance of the secondary winding 112vw.

Similarly, the zero-phase voltage V0 of the wu-phase cluster 12wu is applied to the secondary winding 112wu of the transformer 11 and, in proportion to the time integration of this zero-phase component, the zero-phase current I0 flows. The wu-phase zero-phase current 10, which flows in the closed circuit formed by the cluster 12wu and the secondary winding 112wu of the transformer 11, is limited by the inductance of the secondary winding 112wu.

In this manner, the power conversion device 1 in the first embodiment can limit the zero-phase current I0 with the use of the inductance of the secondary windings 112uv, 112vw, and 112wu of the transformer 11. This configuration therefore enables the power conversion device 1 to eliminate the need for a single-phase reactor, thus realizing compact size and low cost of the device.

The method for controlling the currents Iuv, Ivw, and Iwu of the power conversion device 1 in the first embodiment is described below with reference as necessary to FIG. 1 and FIG. 2.

The control unit 13 of the power conversion device 1 determines the cluster voltages Vuv, Vvw, and Vwu by controlling the voltage of the DC capacitor 1215 of each unit cell 121 of the clusters 12uv, 12vw, and 12wu and by controlling the on/off of the switching devices 1211 - 1214 included in the unit cell 121. That is, the control unit 13 detects the voltage of the DC capacitor 1215 of each unit cell 121, included in the clusters 12uv, 12vw, and 12wu, and turns on or off the switching devices 1211 to 1214, included in the unit cell 121, for controlling the cluster voltages Vuv, Vvw, and Vwu so that each cluster voltage becomes a desired voltage value.

First, the following describes a case in which the power conversion device 1 supplies capacitive reactive power to the electric power system 2 as a static synchronous compensator.

The control unit 13 of the power conversion device 1 detects the line voltages Vsuv, Vsvw, and Vswu, matches the frequency and the phase of the fundamental wave component of the cluster voltages Vuv, Vvw, and Vwu with the frequency and the phase of the line-to-line voltages Vsuv, Vsvw, and Vswu, and performs control so that the amplitude of the fundamental wave component of the cluster voltages Vuv, Vvw, and Vwu becomes smaller than the amplitude of the line-to-line voltages Vsuv, Vsvw, and Vswu.

In this case, the primary-side currents Iuv1, Ivw1, and Iwu1 lag the line-to-line voltages Vsuv, Vsvw, and Vswu by a phase angle of 90°. Therefore, the power conversion device 1 can supply capacitive reactive power to the electric power system 2.

Next, the following describes a case in which the power conversion device 1 supplies inductive reactive power to the electric power system 2 as a static synchronous compensator.

The control unit 13 of the power conversion device 1 detects the line voltages Vsuv, Vsvw, and Vswu, matches the frequency and the phase of the fundamental wave component of the cluster voltages Vuv, Vvw, and Vwu with the frequency and the phase of the line voltages Vsuv, Vsvw, and Vswu, and performs control so that the amplitude of the fundamental wave component of the cluster voltages Vuv, Vvw, and Vwu becomes larger than the amplitude of the line voltages Vsuv, Vsvw, and Vswu.

In this case, the primary-side currents Iuv1, Ivw1, and Iwu1 lead the line voltages Vsuv, Vsvw, and Vswu by a phase angle of 90°. Therefore, the power conversion device 1 can supply inductive reactive power to the electric power system 2.

The control method for use when the power conversion device 1 supplies capacitive or inductive reactive power to the electric power system 2 as a static synchronous compensator has been described.

As another control method, the power conversion device 1 may detect the voltage, applied to the positive-phase inductance of the transformer 11, and controls the cluster voltages Vuv, Vvw, and Vwu to control the primary-side currents Iuv1, Ivw1, and Iwu1.

As a still another control method, the power conversion device 1 may directly detect the primary-side currents Iuv1, Ivw1, and Iwu1 using the ammeters and perform feedback control so that the current values becomes desired current values.

As yet another control method, the power conversion device 1 may directly detect the secondary-side currents Iuv2, Ivw2, and Iwu2 using the ammeters and perform feedback control so that the current values become desired current values. The primary-side currents Iuv1, Ivw1, and Iwu1 and the secondary-side currents Iuv2, Ivw2, and Iwu2 are determined by the turn ratio of the transformer 11. Therefore, the primary-side currents Iuv1, Ivw1, and Iwu1 can be controlled by controlling the secondary-side currents Iuv2, Ivw2, and Iwu2.

In place of the fundamental wave current of the primary-side currents Iuv1, Ivw1, and Iwu1, the power conversion device 1 may control the negative-phase current or the harmonic current.

The power conversion device 1 may perform control so that the cluster voltages Vuv, Vvw, and Vwu include the zero-phase voltage V0. The zero-phase current 10, which flows in the clusters 12uv, 12vw, and 12wu, is proportional to the time integration of the sum voltage Vuv + Vvw + Vwu. Therefore, the power conversion device 1 can control the zero-phase current I0 by controlling the cluster voltages Vuv, Vvw, and Vwu. The power conversion device 1 can control the secondary-side currents Iuv2, Ivw2, and Iwu2 that flow in the clusters 12uv, 12vw, and 12wu.

### (Effects of the first embodiment)

The first embodiment described above gives the following effects (A) to (D).
(A) The power conversion device 1 limits the zero-phase current I0 by the inductance of the secondary windings 112uv, 112vw, and 112wu of the transformer 11. This configuration therefore enables the power conversion device 1 to eliminate the need for a current-limiting, single-phase reactor, thus realizing compact size and low cost of the device.
(B) Each unit cell 121 includes the full-bridge-configured switching devices 1211 - 1214 and, on the DC side of the full-bridge circuit, includes the DC capacitor 1215. In each unit cell 121, one of the positive voltage that is the voltage across both ends of the DC capacitor 1215, the negative voltage that is the reverse of the voltage across both ends of the DC capacitor 1215, and the zero voltage may be applied to the positive-side terminal 1218 and the negative-side terminal 1219. This allows the clusters 12uv, 12vw, and 12wu, each of which includes M series-connected unit cells 121, to apply the voltage at the level of (1 + 2 × M).
(C) The transformer 11 is a three-phase transformer with the legs 113uv, 113vw, and 113wu. This configuration allows the power conversion device 1 to link to the three-phase AC electric power system 2.
(D) The power conversion device 1, connected and linked to the electric power system 2, can supply capacitive reactive power and inductive reactive power to the electric power system 2. This configuration enables the power conversion device 1 to operate as a static synchronous compensator.

### (Second embodiment)

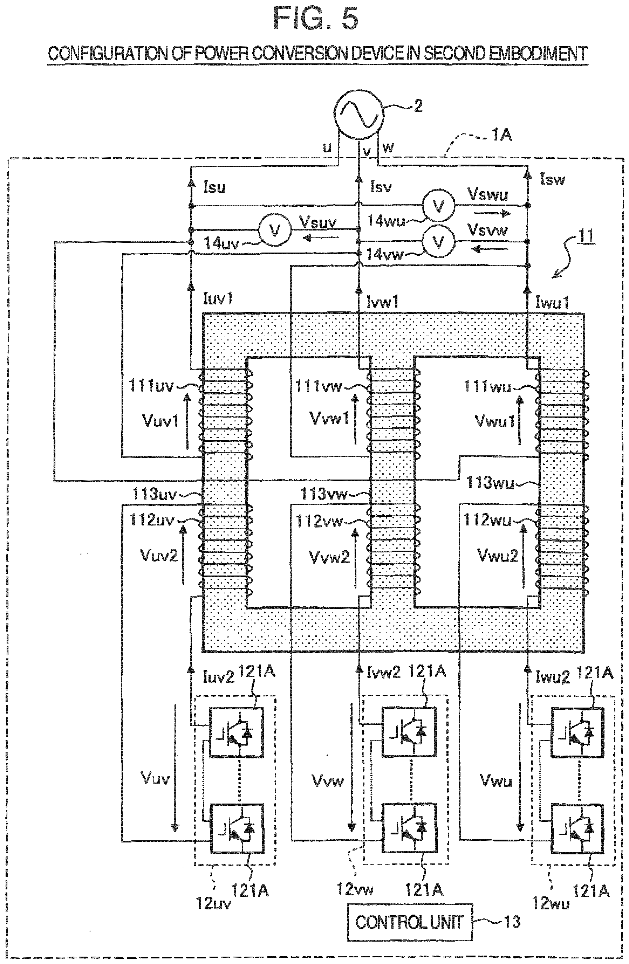

FIG. 5 is a general configuration diagram showing a power conversion device 1A in a second embodiment. The same reference value is given to the same member as that of the power conversion device 1 in the first embodiment shown in FIG. 1.

Unlike the power conversion device 1 in the first embodiment shown in FIG. 1, the power conversion device 1A in the second embodiment has a configuration in which the six unit cells 121, included in each of the clusters 12uv, 12vw, and 12wu, are replaced by unit cells 121A. The power conversion device 1A in the second embodiment can continuously send and receive active power to and from the electric power system 2.

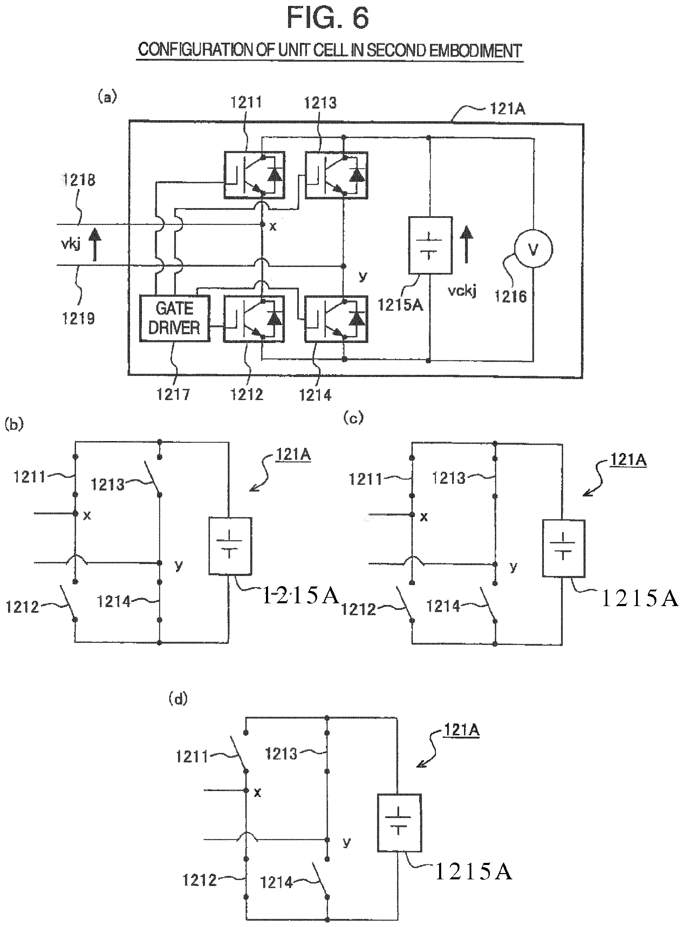

FIG. 6(a) to 6(d) are diagrams showing the configuration and the operation of the unit cells 121A in the second embodiment. The same reference value is given to the same member as that of the unit cell 121 in the first embodiment shown in FIG. 2.

FIG. 6(a) is a diagram showing the configuration of the unit cell 121A in the second embodiment.

Unlike the unit cell 121 in the first embodiment (see FIG. 2), the unit cell 121A in the second embodiment includes a secondary battery 1215A instead of the DC capacitor 1215 (see FIG. 6). The secondary battery 1215A is voltage application means for applying the voltage vckj across the both ends and, at the same time, active power supply means for supplying active power. Note that k indicates one of the uv-phase, vw-phase, and wu-phase and that j indicates the number of the unit cell 121A.

FIG. 6(b) is a diagram showing a method for applying the positive voltage to the unit cell 121A.

In the manner similar to that shown in FIG. 2(b), the unit cell 121A controls the on/off of the switching devices 1211 to 1214. In this case, the unit cell voltage vkj is approximately equal to the voltage vckj, applied by the secondary battery 1215A, regardless of the electric current flowing in this unit cell 121A.

FIG. 6(c) is a diagram showing a method for applying the zero voltage to the unit cell 121A.

In the manner similar to that shown in FIG. 2(c), the unit cell 121A controls the on/off of the switching devices 1211 to 1214. In this case, the unit cell voltage vkj is approximately equal to 0[V] regardless of the electric current flowing in this unit cell 121A.

FIG. 6(d) is a diagram showing a method for applying the negative voltage to the unit cell 121A.

In the manner similar to that shown in FIG. 2(d), the unit cell 121A controls the on/off of the switching devices 1211 to 1214. In this case, the unit cell voltage vkj is approximately equal to the negative voltage (-vckj), which is the reverse of the voltage applied by the secondary battery 1215A, regardless of the electric current flowing in this unit cell 121A.

Therefore, the unit cells 121 may be thought of as the voltage source that applies the positive voltage vckj, zero voltage (0), or negative voltage (-vckj) regardless of the electric current flowing in this unit cell 121A.

As with the power conversion device 1 in the first embodiment, the power conversion device 1A in the second embodiment detects the voltage of the secondary battery 1215A of each unit cell 121A included in each of the clusters 12uv, 12vw, and 12wu and controls the on/off the switching devices 1211 to 1214 included in the unit cell 121A. This configuration allows the power conversion device 1A to control the cluster voltages Vuv, Vvw, and Vwu so that the voltages become desired voltage values.

The control method used by the power conversion device 1A to receive active power from the electric power system 2 is described below with reference as necessary to FIG. 5.

The control unit 13 of the power conversion device 1A detects the line voltages Vsuv, Vsvw, and Vswu, matches the frequency and the amplitude of the basic wave component of the cluster voltages Vuv, Vvw, and Vwu with the frequency and the amplitude of the line voltages Vsuv, Vsvw, and Vswu and, in addition, delays the phase of the fundamental wave component of the cluster voltages Vuv, Vvw, and Vwu from the phase of the line voltages Vsuv, Vsvw, and Vswu.

In this case, in the primary-side currents Iuv1, Ivw1, and Iwu1, the current, whose phase is the anti-phase of the phase of the line voltages Vsuv, Vsvw, and Vswu, flows. Therefore, the power conversion device 1A can receive active power from the electric power system 2.

Next, the control method used by the power conversion device 1A to send (supply) active power to the electric power system 2 is described below with reference as necessary to FIG. 5.

The power conversion device 1A detects the line voltages Vsuv, Vsvw, and Vswu, matches the frequency and the amplitude of the fundamental wave component of the cluster voltages Vuv, Vvw, and Vwu with the frequency and the amplitude of the line voltages Vsuv, Vsvw, and Vswu and, in addition, leads the phase of the fundamental wave component of the cluster voltages Vuv, Vvw, and Vwu from the phase of the line voltages Vsuv, Vsvw, and Vswu.

In this case, in the primary-side currents Iuv1, Ivw1, and Iwu1, the current, whose phase is the in-phase of the phase of the line voltages Vsuv, Vsvw, and Vswu, flows. Therefore, the power conversion device 1A can send (supply) active power to the electric power system 2.

As described above, the power conversion device 1A can continuously send and receive active power to and from the electric power system 2 with the use of the unit cell 121A to which the secondary battery 1215A is connected. Therefore, the power conversion device 1A can be used as a power storage system that is linked to the electric power system 2.

### (Effects of the second embodiment)

The second embodiment described above gives the following effects (E) and (F).
(E) The unit cell 121A of the power conversion device 1A has the secondary battery 1215A. This configuration allows the power conversion device 1A to continuously send and receive active power to and from the electric power system 2.
(F) The power conversion device 1A can store active power of the electric power system 2 in the secondary battery 1215A and supply active power, stored in the secondary battery 1215A, to the electric power system 2. Therefore, the power conversion device 1A can function as a power storage system.

### (Third embodiment)

A power conversion device 1B in a third embodiment uses the unit cells 121A to each of which the secondary battery 1215A that works as active power supply means, such as the one shown in FIG. 5, is connected. The power conversion device 1B supplies power to an electric motor 3 and to other AC loads. This configuration allows the power conversion device 1B in the third embodiment to apply AC voltage of any amplitude and any frequency to the electric motor 3 and to other AC loads.

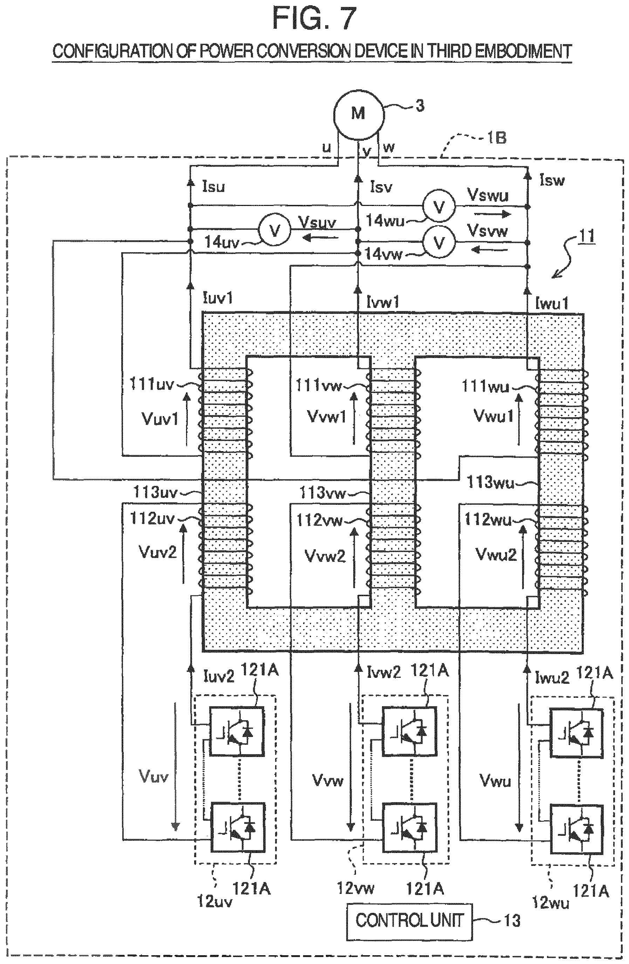

FIG. 7 is a general configuration diagram showing the power conversion device 1B in the third embodiment. The same reference value is given to the same member as that of the power conversion device 1A in the second embodiment shown in FIG. 5.

As shown in FIG. 7, unlike the power conversion device 1A in the second embodiment, the power conversion device 1B in the third embodiment is connected to the electric motor 3. The other configuration is similar to that of the power conversion device 1A in the second embodiment.

The power conversion device 1B in the third embodiment is connected directly to the electric motor 3. Note that the power conversion device 1B need not always be connected directly to the electric motor 3 but may be connected to the electric motor 3 via another transformer, a reactor, or a filter.

The method for controlling the power conversion device 1B is described below with reference as necessary to FIG. 7.

As described in the first embodiment, the cluster voltages Vuv, Vvw, and Vwu across both ends of the clusters 12uv, 12vw, and 12wu can be controlled by controlling the on/off of the switching devices 1211 - 1214 of the unit cell 121A included in each of the clusters 12uv, 12vw, and 12wu.

The amplitude of the cluster voltages Vuv, Vvw, and Vwu can be controlled to any value in the range from (-vckj × M) [V] to (vckj × M) [V] in increments of vckj [V], including 0 [V], where the number of unit cells 121A included in each of the clusters 12uv, 12vw, and 12wu is M and the voltage applied by the secondary battery 1215A of each unit cell 121A is the voltage vckj.

In addition, the frequency of the cluster voltages Vuv, Vvw, and Vwu can be controlled to any value in the range lower than the switching frequency. By feedback controlling the currents Isu, Isv, abd Isw, which flow to the electric motor 3 via the cluster voltages Vuv, Vvw, and Vwu, either directly or via the current signal generated by coordinate conversion, the torque, the rotation speed, and the rotation position of the electric motor 3 can be controlled.

As described above, the power conversion device 1B in the third embodiment, which operates as a device for applying an AC voltage of any amplitude and any frequency, can control the torque, the rotation speed, and the rotation position of the electric motor 3.

### (Effects of the third embodiment)

The third embodiment described above gives the following effects (G) and (H).
(G) The power conversion device 1B, connected to the electric motor 3, can apply an AC voltage of any amplitude and any frequency to the electric motor 3. This configuration therefore allows the power conversion device 1B to control the torque, the rotation speed, and the rotation position of the electric motor 3.
(H) The control unit 13 of the power conversion device 1B can control the zero-phase voltage V0 of the clusters 12uv, 12vw, and 12wu and the zero-phase current I0 that flows in those clusters. This configuration therefore allows the phases of the electric motor 3 or an AC load to be controlled even when they are unbalanced.

### (Modifications)

It will be understood that the present invention is not limited to the embodiments described above but that various modifications are included. For example, the above embodiments are described in detail to make it easy to understand the present invention but the embodiments should not be limited to those having all configurations that are described. It is possible to replace a part of the configuration of one embodiment with the configuration of another or to add a part of the configuration of one embodiment to the configuration of another. It is also possible to add another configuration to, or to delete or replace, a part of the configuration of each embodiment.

The configurations, functions, processing units, and processing means described above may be implemented, in part or in whole, by hardware such as an integrated circuit. The configurations and the functions described above may also be implemented by software by the processor that interprets and executes the program created for implementing the function. The information on the programs, tables, and files for implementing the functions may be stored in a recording device such as a memory, a hard disk, or an SSD (Solid State Drive) or in a recording medium such as a flash memory card or a DVD (Digital Versatile Disk).

In the description of each embodiment, it should be noted that only the control lines and information lines necessary for the description are shown and that all control lines or information lines necessary for the product are not shown. In practice, almost all the configurations are considered interconnected with each other.

Examples of the modifications of the present invention are (a) to (e) given below.
(a) In the first to third embodiments, the primary windings 111uv, 111vw, and 111wu of the transformer 11 are delta-connected. However, the primary windings 111uv, 111vw, and 111wu may be connected not only in the delta connection but also in another line connection method such as the star connection or the zigzag connection.
(b) In the first to third embodiments, the transformer 11 uses a three-leg core. However, the core is not limited to a three-leg core. The transformer 11 may use a four-leg core instead of a three-leg core. In addition, the transfer may use a multiple-leg core having four or more legs.
(c) The power conversion device in the first to third embodiments is a three-phase MMC. However, the power conversion device is not limited to a three-phase MMC, but a polyphase MMC having four or more phases may be used.
(d) Instead of the secondary battery 1215A, the unit cell 121A in the second embodiment may include another power supply device that supplies active power such as a solar cell or a fuel cell. This allows the power conversion device 1A to continuously supply active power to the electric power system 2.
(e) The power conversion device 1B in the third embodiment is connected to the electric motor 3 in the above description. The power conversion device 1B need not always be connected to the electric motor 3 but may be connected to a power generator or any other AC load.

## Claims

1. A power conversion device (1, 1A, 1B) comprising:
a cluster (12uv, 12vw, 12wu) in which one or more unit cells (121), each comprising power storage means (1215) and switching means (1211-1214) for outputting the power of the power storage means (1215), are connected in series; and
a three-phase transformer (11) that has at least three legs (113uv, 113vw, 113wu) on each of which a primary winding (111uv, 111vw, 111wu) and a secondary winding (112uv, 112vw, and 112wu) are wound for magnetic coupling wherein
both ends of the secondary winding (112uv, 112vw, 112wu) are connected respectively to both ends of the cluster (12uv, 12vw, 12wu), wherein
a control unit (13) turns on or off the switching means (1211-1214) included in the unit cell (121) for controlling the cluster voltages (Vuv, Vvw, Vwu), so that each cluster voltage becomes a desired voltage value on the basis of the line-to-line voltages (Vsuv, Vsvw and Vswu),
**characterized in that**
each unit cell (121) further comprises a first voltmeter (1216) which is connected to both ends of the power storage means (1215) to measure a voltage vckj and outputs the information on the measured voltage vckj to a control unit (13),
said control unit (13) is further connected to second voltmeters (14uv, 14vw, 14wu) measuring each the line-to-line voltages (Vsuv, Vsvw, Vswu) between the respective phases of an electric power system (2), linked to the power conversion device (1),
the control unit (13) detects the voltage of the power storage means (1215) of each unit cell (121) included in the clusters (12uv, 12vw, 12wu) and controls the cluster voltages (Vuv, Vvw, Vwu) by a zero-phase voltage Vo, which is the sum of the cluster voltages (Vuv, Vvw, Vwu), to limit the zero-phase current I₀, which is the current that circulates through all clusters and flows into the three-phase transformer (11).

2. The power conversion device (1, 1A, 1B) according to claim 1 wherein the primary windings (111uv, 111vw, 111wu) are delta-connected.

3. The power conversion device (1, 1A, 1B) according to claim 1 wherein the primary windings (111uv, 111vw, 111wu) are star-connected or zigzag-connected.

4. The power conversion device (1, 1A, 1B) according to claim 1 wherein
the unit cell (121) comprises:
a full-bridge circuit in which at least four switching devices (1211 to 1214) are 81-74114EP-CM/Kf
connected;
voltage application means connected to a DC side of the full-bridge circuit; and
a positive-side terminal (1218) and a negative-side terminal (1219) connected to an AC side of the full-bridge circuit.

5. The power conversion device (1, 1A, 1B) according to claim 4 wherein
the voltage application means is a capacitor (1215).

6. The power conversion device (1, 1A, 1B) according to claim 1 wherein
the transformer (11) is a three-phase transformer having the three legs (113uv, 113vw, 113wu).

7. The power conversion device (1, 1A, 1B) according to claim 1 wherein
the primary windings (111uv, 111vw, 111wu) of the transformer (11) are connected to phases of an electric power system (2) for linking to the electric power system (2).

8. The power conversion device (1, 1A, 1B) according to claim 7 wherein
capacitive reactive power or inductive reactive power is supplied to the electric power system (2).

9. The power conversion device (1, 1A, 1B) according to claim 4 wherein
the voltage application means is active power supply means for supplying active power via the full-bridge circuit.

10. The power conversion device (1, 1A, 1B) according to claim 9 wherein
the active power supply means is any one of a secondary cell, a solar cell, and a fuel cell.

11. The power conversion device (1, 1A, 1B) according to claim 9 wherein
the primary windings (111uv, 111vw, 111wu) of the transformer (11) are connected to an electric motor (3) and
power of any amplitude and any frequency is supplied to the electric motor (3) to control a torque, a rotation speed, and a position of the electric motor (3).

12. The power conversion device (1, 1A, 1B) according to claim 6 wherein a primary winding wound on a respective core leg is connected to a three-phase AC power supply.

13. The power conversion device (1, 1A, 1B) according to at least one of the preceding claims wherein a primary winding wound on a respective core leg is connected to a three-phase AC load.

14. The power conversion device according to claim 6 wherein
a respective cluster controls the zero-phase current and the cluster voltage of the respective cluster on the basis of the respective line-to-line voltage (Vsuv, Vsvw, Vswu) measured by the second voltmeters (14uv, 14vw, 14wu) and of the inductance of the secondary windings of the three-phase transformer (11).

15. The power conversion device (1, 1A, 1B) according to claim 6 wherein
the zero-phase current flowing in the secondary windings of the three-phase transformer (11) is limited by the inductance of the transformer (11).

## Patentansprüche

1. Stromwandler (1, 1A, 1B) mit:
einer Gruppe (12uv, 12vw, 12wu), in der eine oder mehrere Einheitszellen (121), von denen jede Stromspeichermittel (1215) und Schaltmittel (1211-1214) zum Ausgeben des Stroms der Stromspeichermittel (1215) aufweist, in Reihe geschaltet sind, und
einem Dreiphasen-Transformator (11), der drei Schenkel (113uv, 113vw, 113wu) aufweist, auf denen jeweils eine Primärwicklung (111uv, 111vw, 111wu) und eine Sekundärwicklung (112uv, 112vw und 112wu) zur magnetischen Kopplung gewickelt sind, wobei
beide Enden der Sekundärwicklung (112uv, 112vw, 112wu) jeweils mit beiden Enden der Gruppe (12uv, 12vw, 12wu) verbunden sind, wobei
eine Steuereinheit (13) die Schaltmittel (1211-1214), welches in der Einheitszelle (121) zur Steuerung der Gruppenspannungen (Vuv, Vvw, Vwu) angeordnet sind, an- oder ausschaltet, sodass jede Gruppenspannung einen gewünschten Spannungswert hat, auf der Grundlage der Außenleiterspannungen (Vsuv, Vsvw und Vswu),
**dadurch gekennzeichnet, dass**
jede Einheitszelle (121) ferner ein erstes Voltmeter (1216) aufweist, das mit beiden Enden der Stromspeichermittel (1215) verbunden ist, um eine Spannung vckj zu messen, und die Informationen über die gemessene Spannung vckj an eine Steuereinheit (13) ausgibt,
wobei die Steuereinheit (13) ferner mit zweiten Voltmetern (14uv, 14vw, 14wu) verbunden ist, die jeweils die Außenleiterspannungen (Vsuv, Vsvw, Vswu) zwischen den jeweiligen Phasen eines Stromversorgungsnetzes (2) messen, welches mit dem Stromwandler (1) verbunden ist,
wobei die Steuereinheit (13) die Spannung der Stromspeichermittel (1215) einer jeden Einheitszelle (121) erfasst, die in den Gruppen (12uv, 12vw, 12wu) angeordnet sind, und die Gruppenspannungen (Vuv, Vvw, Vwu) durch eine Nullphasenspannung V₀ steuert, die die Summe der Gruppenspannungen (Vuv, Vvw, Vwu) ist, um den Nullphasenstrom I₀ zu begrenzen, der der Strom ist, der durch alle Gruppen zirkuliert und in den Dreiphasen-Transformator (11) fließt.

2. Stromwandler (1, 1A, 1B) nach Anspruch 1, wobei die Primärwicklungen (111uv, 111vw, 111wu) im Dreieck geschaltet sind.

3. Stromwandler (1, 1A, 1B) nach Anspruch 1, wobei die Primärwicklungen (111uv, 111vw, 111wu) sternförmig verbunden oder zickzack-förmig verbunden sind.

4. Stromwandler (1, 1A, 1b) nach Anspruch 1, wobei die Einheitszelle (121) aufweist:
eine Vollbrückenschaltung, in der mindestens vier Schaltvorrichtungen (1211 bis 1214) verbunden sind,
Spannungsanlegemittel, die an einer Gleichstromseite der Vollbrückenschaltung angeschlossen sind, und
einen Anschluss (1218) auf der positiven Seite und einen Anschluss (1219) auf der negativen Seiten, die an der Wechselstromseite der Vollbrückenschaltung angeschlossen sind.

5. Stromwandler (1, 1A, 1B) nach Anspruch 4, wobei das Spannungsanlegemittel ein Kondensator (1215) ist.

6. Stromwandler (1, 1A, 1B) nach Anspruch 1, wobei der Transformator (11) ein Dreiphasen-Transformator ist, der drei Schenkel (113uv, 113vw, 113wu) aufweist.

7. Stromwandler (1, 1A, 1B) nach Anspruch 1, wobei die Primärwicklungen (111uv, 111vw, 111wu) des Transformators (11) mit Phasen eines Stromversorgungsnetzes (2) verbunden sind, um das Stromversorgungsnetz (2) zu verbinden.

8. Stromwandler (1, 1A, 1B) nach Anspruch 7, wobei die kapazitive Blindleistung oder induktive Blindleistung an das Stromversorgungsnetz (2) geliefert wird.

9. Stromwandler (1, 1A, 1B) nach Anspruch 4, wobei das Spannungsanlegemittel ein aktives Stromversorgungsmittel ist zum Liefern aktiven Stroms über die Vollbrückenschaltung.

10. Stromwandler (1, 1A, 1B) nach Anspruch 9, wobei das aktive Stromversorgungsmittel eine Sekundärzelle, Solarzelle oder eine Brennstoffzelle ist.

11. Stromwandler (1, 1A, 1B) nach Anspruch 9, wobei
die Primärwicklungen (111uv, 111vw, 111wu) des Transformators (11) mit einem elektrischen Motor (3) verbunden sind, und
Strom mit einer beliebigen Amplitude und einer beliebigen Frequenz an den elektrischen Motor (3) geliefert wird, um ein Drehmoment, eine Drehzahl und eine Stellung des Elektromotors (3) zu steuern.

12. Stromwandler (1, 1A, 1B) nach Anspruch 6, wobei eine Primärwicklung, die um einen jeweiligen Schenkel gewickelt ist, mit einer Dreiphasen-Wechselstromversorgung verbunden ist.

13. Stromwandler (1, 1A, 1B) nach mindestens einem der vorstehenden Ansprüche, wobei eine Primärwicklung, die um einen jeweiligen Schenkel gewickelt ist, mit einer Dreiphasen-Wechselstromlast verbunden ist.

14. Stromwandler (1, 1A, 1B) nach Anspruch 6, wobei eine jeweilige Gruppe den Nullphasenstrom und die Gruppenspannung der jeweiligen Gruppe auf der Grundlage der entsprechenden Außenleiterspannung (Vsuv, Vsvw, Vswu) steuert, die durch die zweiten Voltmeter (14uv, 14vw, 14wu) gemessen wird, und auf der Grundlage der Induktivität der Sekundärwicklungen des Dreiphasen-Transformators (11).

15. Stromwandler (1, 1A, 1B) nach Anspruch 6, wobei der Nullphasenstrom, der in die Sekundärwicklungen des Dreiphasen-Transformators (11) fließt, durch die Induktivität des Transformators (11) begrenzt ist.

## Revendications

1. Dispositif (1, 1A, 1B) de conversion d'énergie comprenant :
un groupe (12uv, 12vw, 12wu) dans lequel une ou plusieurs cellules unitaires (121), chacune comprenant un moyen (1215) de stockage d'énergie et des moyens (1211-1214) de commutation pour délivrer en sortie l'énergie du moyen (1215) de stockage d'énergie, sont connectées en série ; et
un transformateur triphasé (11) qui a au moins trois colonnes (113uv, 113vw, 113wu) sur chacune desquelles un enroulement principal (111uv, 111vw, 111wu) et un enroulement secondaire (112uv, 112vw, et 112wu) sont enroulés pour un couplage magnétique dans lequel
les deux extrémités de l'enroulement secondaire (112uv, 112vw, 112wu) sont connectées respectivement aux deux extrémités du groupe (12uv, 12vw, 12wu), dans lequel
une unité (13) de commande active ou désactive les moyens (1211-1214) de commutation inclus dans la cellule unitaire (121) pour commander les tensions (Vuv, Vvw, Vwu) de groupe, de telle manière que chaque tension de groupe devient une valeur de tension désirée sur la base des tensions (Vsuv, Vsvw, et Vswu) de ligne à ligne,
**caractérisé en ce que**
chaque cellule unitaire (121) comprend en outre un premier voltmètre (1216) qui est connecté aux deux extrémités du moyen (1215) de stockage d'énergie pour mesurer une tension vckj et délivrer en sortie l'information sur la tension vckj mesurée pour une unité (13) de commande,
ladite unité (13) de commande est en outre connectée à des deuxièmes voltmètres (14uv, 14vw, 14wu) mesurant chacun les tensions (Vsuv, Vsvw, et Vswu) de ligne à ligne entre les phases respectives d'un système (2) d'énergie électrique, lié au dispositif (1) de conversion d'énergie,
l'unité (13) de commande détecte la tension du moyen (1215) de stockage d'énergie de chaque cellule unitaire (121) incluse dans les groupes (12uv, 12vw, 12wu) et commande les tensions (Vuv, Vvw, Vwu) de groupe par une tension V₀ de phase zéro, qui est la somme des tensions (Vuv, Vvw, Vwu) de groupe, pour limiter le courant I₀ de phase zéro, qui est le courant qui circule à travers tous les groupes et passe dans le transformateur triphasé (11).

2. Dispositif (1, 1A, 1B) de conversion d'énergie selon la revendication 1 dans lequel les enroulements principaux (111uv, 11 1vw, 111wu) sont connectés en delta.

3. Dispositif (1, 1A, 1B) de conversion d'énergie selon la revendication 1 dans lequel les enroulements principaux (111uv, 11 1vw, 111wu) sont connectés en étoile ou connectés en zigzag.

4. Dispositif (1, 1A, 1B) de conversion d'énergie selon la revendication 1 dans lequel
la cellule unitaire (121) comprend :
un circuit en pont complet dans lequel au moins quatre dispositifs (1211 à 1214) de commutation sont connectés ;
un moyen d'application de tension connecté à un côté CC du circuit en pont complet ; et
une borne (1218) de côté positif et une borne (1219) de côté négatif connectées à un côté CA du circuit en pont complet.

5. Dispositif (1, 1A, 1B) de conversion d'énergie selon la revendication 4 dans lequel
le moyen d'application de tension est un condensateur (1215).

6. Dispositif (1, 1A, 1B) de conversion d'énergie selon la revendication 1 dans lequel
le transformateur (11) est un transformateur triphasé ayant trois colonnes (113uv, 113vw, 113wu).

7. Dispositif (1, 1A, 1B) de conversion d'énergie selon la revendication 1 dans lequel
les enroulements principaux (111uv, 111vw, 111wu) du transformateur (11) sont connectés à des phases d'un système (2) d'énergie électrique pour une liaison au système (2) d'énergie électrique.

8. Dispositif (1, 1A, 1B) de conversion d'énergie selon la revendication 7 dans lequel
une énergie réactive capacitive ou une énergie réactive inductive est alimentée jusqu'au système (2) d'énergie électrique.

9. Dispositif (1, 1A, 1B) de conversion d'énergie selon la revendication 4 dans lequel
le moyen d'application de tension est un moyen d'alimentation d'énergie active pour alimenter une énergie active par l'intermédiaire du circuit en pont complet.

10. Dispositif (1, 1A, 1B) de conversion d'énergie selon la revendication 9 dans lequel
le moyen d'alimentation d'énergie active est une quelconque parmi une cellule secondaire, une cellule solaire, et une pile à combustible.

11. Dispositif (1, 1A, 1B) de conversion d'énergie selon la revendication 9 dans lequel
les enroulements principaux (111uv, 111vw, 111wu) du transformateur (11) sont connectés à un moteur électrique (3) et
une énergie d'une amplitude quelconque et d'une fréquence quelconque est alimentée jusqu'au moteur électrique (3) pour commander un couple, une vitesse de rotation, et une position du moteur électrique (3).

12. Dispositif (1, 1A, 1B) de conversion d'énergie selon la revendication 6 dans lequel
un enroulement principal enroulé sur une colonne respective est connecté à une alimentation électrique en CA triphasé.

13. Dispositif (1, 1A, 1B) de conversion d'énergie selon au moins une des revendications précédentes dans lequel
un enroulement principal enroulé sur une colonne respective est connecté à une charge en CA triphasé.

14. Dispositif de conversion d'énergie selon la revendication 6 dans lequel
un groupe respectif commande le courant de phase zéro et la tension de groupe du groupe respectif sur la base de la tension (Vsuv, Vsvw, Vswu) de ligne à ligne respective mesurée par les deuxièmes voltmètres (14uv, 14vw, 14wu) et de l'inductance des enroulements secondaires du transformateur triphasé (11).

15. Dispositif (1, 1A, 1B) de conversion d'énergie selon la revendication 6 dans lequel
le courant de phase zéro passant dans les enroulements secondaires du transformateur triphasé (11) est limité par l'inductance du transformateur (11).
